# EUROPEAN PATENT APPLICATION

(11) **EP 4 524 644 A1**
(43) Date of publication of application: **19.03.2025**
(21) Application number: 23803463.1
(22) Date of filing: 27.04.2023
(51) Int. Cl.: G02B 27/28

(54) **OPTICAL ISOLATOR**

(30) Priority: 09.05.2022 JP 2022077129
(71) Applicant: SHIN-ETSU CHEMICAL CO., LTD., Tokyo 1000005 (JP)
(72) Inventor: WATANABE, Toshiaki, Annaka-shi, Gunma 379-0195 (JP)
(74) Representative: Röthinger, Rainer
(86) International application number: PCT/JP2023/016604
(87) International publication number: WO 2023/218984

(57) **Abstract**

The present invention provides an optical isolator with multiple stages that includes: an optical element including at least a first polarizer, a first Faraday rotator, a second polarizer, a third polarizer, a second Faraday rotator, and a fourth polarizer in sequence in a direction in which light travels; and at least one permanent magnet configured to apply a magnetic field to the first Faraday rotator and the second Faraday rotator. A relative angle between a transmitted light polarization axis of the second polarizer and a transmitted light polarization axis of the third polarizer is equal to or more than 0.1 degrees. The optical isolator having high light-blocking performance is thus provided.

## Description

### TECHNICAL FIELD

The present invention relates to an optical isolator.

### BACKGROUND ART

For example, in optical measurement, laser oscillation becomes unstable when light emitted from a laser returns to the laser light source as reflected light from a surface of a member provided at some point in a transmission line. In order to block the reflected return light, an optical isolator is used, which includes a Faraday rotator to rotate a plane of polarization in a non-reciprocal manner.

### CITATION LIST

### PATENT LITERATURE

Patent Document 1: JP H02-272419 A

### SUMMARY OF INVENTION

### TECHNICAL PROBLEM

In optical communication and optical measurement, laser diode (LD) light with a narrower full width at half maximum is used to implement fast communication and high accuracy. For long-distance transmission, increased optical output power of an LD chip or an external amplifier (semiconductor amplifier (SOA)) is more often used in combination. The light with a narrow full width at half maximum is more affected by interference of external reflected light. With the increased optical output power, the intensity of light returning as external reflected light is relatively stronger (greater). Thus, there is a need for an optical isolator with higher light-blocking performance.

An optical isolator with a 1.5-stage construction (three polarizers and two Faraday rotators, also referred to as 1.5-stage optical isolator) provides higher light-blocking performance than an optical isolator with a single-stage construction (two polarizers and one Faraday rotator, also referred to as single-stage optical isolator), but its blocking performance has been dependent on extinction performance of the polarizer at the center. The studies on an optical isolator with a simple, two-stage construction (four polarizers and two Faraday rotators, also referred to as dual-stage optical isolator) have only focused on the magnetic flux direction, the rotating direction of a Faraday rotator, its temperature dependence, and the like (for example, Patent Document 1), and there has been no attempt to improve light-blocking performance.

The present invention was made to solve the above problem and an object of the present invention is to provide an optical isolator having high light-blocking performance.

### SOLUTION TO PROBLEM

The present invention was made to achieve the above object and provides an optical isolator with multiple stages. The optical isolator includes: an optical element including at least a first polarizer, a first Faraday rotator, a second polarizer, a third polarizer, a second Faraday rotator, and a fourth polarizer in sequence in a direction in which light travels; and at least one permanent magnet configured to apply a magnetic field to the first Faraday rotator and the second Faraday rotator. A relative angle between a transmitted light polarization axis of the second polarizer and a transmitted light polarization axis of the third polarizer is equal to or more than 0.1 degrees.

The optical isolator with such a configuration has high light-blocking performance.

The first polarizer, the first Faraday rotator, and the second polarizer may be integrated, and the third polarizer, the second Faraday rotator, and the fourth polarizer may be integrated.

This configuration provides an optical isolator with a smaller size.

In this optical isolator, the second polarizer and the third polarizer may be flat-plate polarizers.

With this configuration, the setting of the relative angle can be performed more stably.

### ADVANTAGEOUS EFFECTS OF INVENTION

As described above, the present invention can provide an optical isolator having high light-blocking performance.

### BRIEF DESCRIPTION OF DRAWINGS

FIG. 1 is a diagram illustrating a dual-stage optical isolator according to an embodiment;
FIG. 2 is a diagram illustrating a dual-stage optical isolator according to another embodiment;
FIG. 3 is a diagram illustrating a relative angle θ between the transmitted light polarization axes of second and third polarizers;
FIG. 4 is a graph illustrating a relationship between the relative angle θ between the transmitted light polarization axes of the second and third polarizers and backward insertion loss of the optical isolator;
FIG. 5 is a graph (enlarged) illustrating a relationship between the relative angle θ between the transmitted light polarization axes of the second and third polarizers and backward insertion loss of the optical isolator;
FIG. 6 is a graph illustrating an evaluation result of wavelength dependence of backward insertion loss in a dual-stage optical isolator of Example **1;**
FIG. 7 is a graph illustrating a relationship between the relative angle θ of the transmitted light polarization axes of the second and third polarizers and forward insertion loss; and
FIG. 8 is a graph illustrating backward insertion loss of a dual-stage optical isolator and wavelength dependence of extinction performance of the second and third polarizers according to an embodiment.

### DESCRIPTION OF EMBODIMENTS

Hereinafter, the present invention will be described in detail. However, the present invention is not limited thereto.

As described above, there has been a need for an optical isolator having high light-blocking performance.

The inventors of the present invention have conducted elaborate studies on the problem above and found that an optical isolator having high light-blocking performance can be provided by an optical isolator with multiple stages that includes: an optical element including at least a first polarizer, a first Faraday rotator, a second polarizer, a third polarizer, a second Faraday rotator, and a fourth polarizer in sequence in a direction in which light travels; and at least one permanent magnet configured to apply a magnetic field to the first Faraday rotator and the second Faraday rotator, in which a relative angle between a transmitted light polarization axis of the second polarizer and a transmitted light polarization axis of the third polarizer is equal to or more than **0.1** degrees. This finding has led to completion of the present invention.

Hereinafter, a description will be given with reference to the drawings.

### (Optical Isolator)

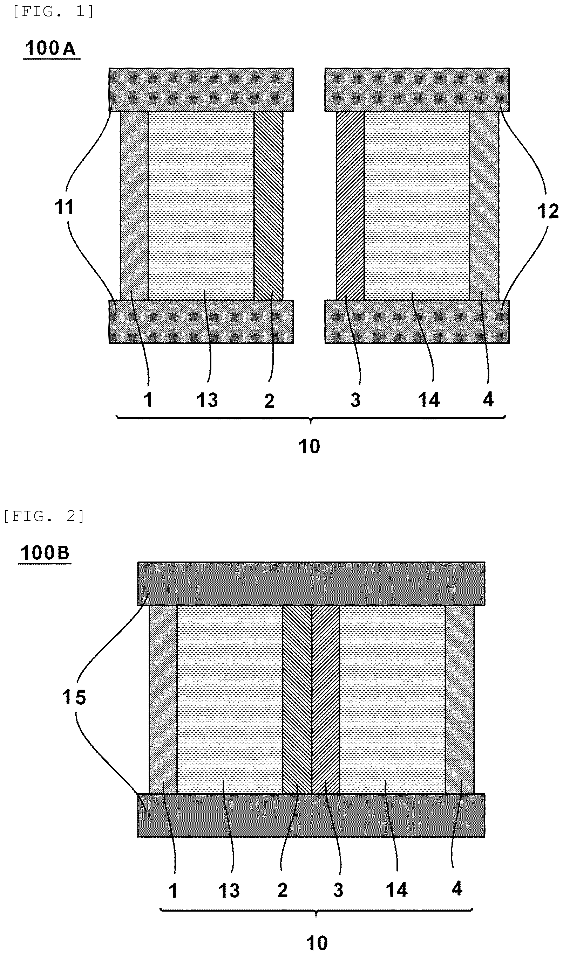

First of all, an optical isolator with a multi-stage construction will be described. FIG. 1 illustrates a dual-stage optical isolator 100A according to an embodiment as an example. As illustrated in FIG. 1, the dual-stage optical isolator 100A includes four polarizers and two Faraday rotators. The dual-stage optical isolator 100A includes an optical element 10 having a first polarizer 1, a first Faraday rotator 13, a second polarizer 2, a third polarizer 3, a second Faraday rotator 14, and a fourth polarizer 4 in sequence in a forward direction (direction in which light travels), a permanent magnet 11 to apply a magnetic field to the first Faraday rotator 13, and a permanent magnet 12 to apply a magnetic field to the second Faraday rotator 14. FIG. 1 illustrates an example in which a section including a first stage of the optical element 10 (first polarizer 1, first Faraday rotator 13, second polarizer 2) and the permanent magnet 11 is separate from a section including a second stage of the optical element 10 (third polarizer 3, second Faraday rotator 14, fourth polarizer 4) and the permanent magnet 12.

Preferably, multiple stages are integrated to make a multi-stage optical isolator. For example, the first stage and the second stage illustrated in FIG. 1 may be integrated to make an integrated, dual-stage optical isolator 100B as illustrated in FIG. 2. In this case, the optical isolator may include a single permanent magnet 15 as a permanent magnet that applies a magnetic field to the first Faraday rotator 13 and the second Faraday rotator 14. Such an optical isolator can be reduced in size because the gap between the second polarizer and the third polarizer is eliminated.

Known polarizers, Faraday rotators and permanent magnets can be employed as appropriate for the first polarizer, the first Faraday rotator, the second polarizer, the third polarizer, the second Faraday rotators, the fourth polarizer, and the permanent magnet. For example, (TbEuBi)₃(FeGa)₅O₁₂ or (GdBi)₃(FeGa)₅O₁₂ can be used for the Faraday rotators. Although the dual-stage optical isolator has been described above as an example, a multi-stage optical isolator with more than two stages can be employed.

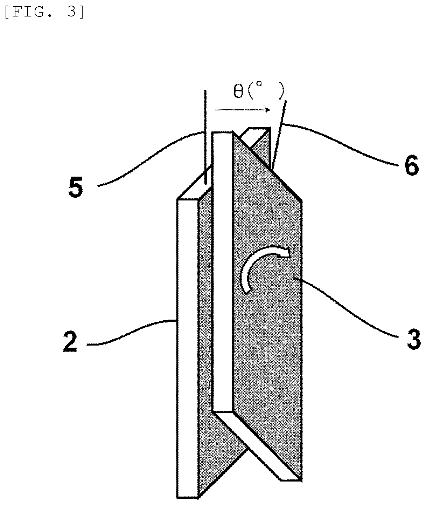

In the multi-stage optical isolator according to the present invention, the relative angle θ between the transmitted light polarization axis of the second polarizer 2 and the transmitted light polarization axis of the third polarizer 3 is equal to or more than 0.1 degrees. For example, as illustrated in FIG. 3, the relative angle θ between the transmitted light polarization axis 5 of the second polarizer 2 and the transmitted light polarization axis 6 of the third polarizer 3 can be adjusted by rotating the second polarizer 2 and the third polarizer 3 relative to each other while keeping them parallel. In this way, when the relative angle θ between the transmitted light polarization axes of the second and third polarizers located at a central portion of the optical element 10 and adjacent to each other is shifted from 0.0 degrees (°) and the relative angle θ between the transmitted light polarization axes is set to equal to or more than 0.1 degrees (°), a high backward insertion loss can be obtained without being limited to the extinction performance value of the second and third polarizers.

The second polarizer and the third polarizer are preferably flat-plate polarizers. In the optical isolator with such second polarizer and third polarizer, the relative angle θ between the transmitted light polarization axes can be set more stably.

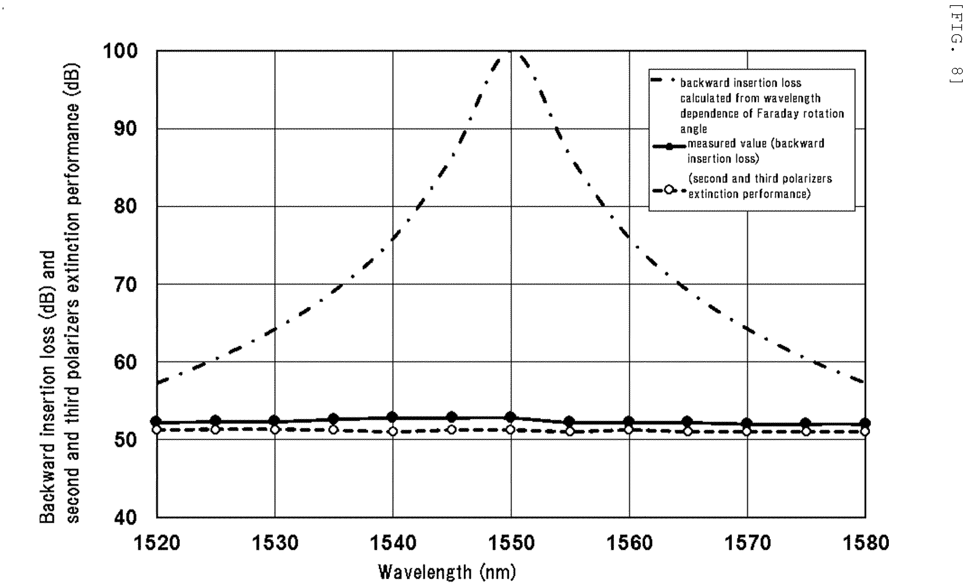

FIG. 8 illustrates an example of backward insertion loss of the dual-stage optical isolator and wavelength dependence of extinction performance of the second and third polarizers. Assuming that the extinction performance of the polarizer used is infinitely large, the backward insertion loss of the optical isolator calculated from the wavelength dependence of the Faraday rotation angle of the Faraday rotator used is as indicated by a dash-dot line in FIG. 8. In actual, the extinction performance of polarizers is finite, and the extinction performance of the second and third polarizers has the characteristic as indicated by the dotted line relative to the optical wavelength. The solid line in FIG. 8 indicates the measured value of backward insertion loss of the dual-stage optical isolator, where the relative angle θ between the transmitted light polarization axes of the second and third polarizers is 0.0 degrees (°). As indicated by the solid line in FIG. 8, the value of backward insertion loss obtained by inserting two (dual-stage) isolators is adjacent to the extinction performance of the second and third polarizers, suggesting that the backward insertion loss is dependent on and limited by the extinction performance of the polarizer located in the middle.

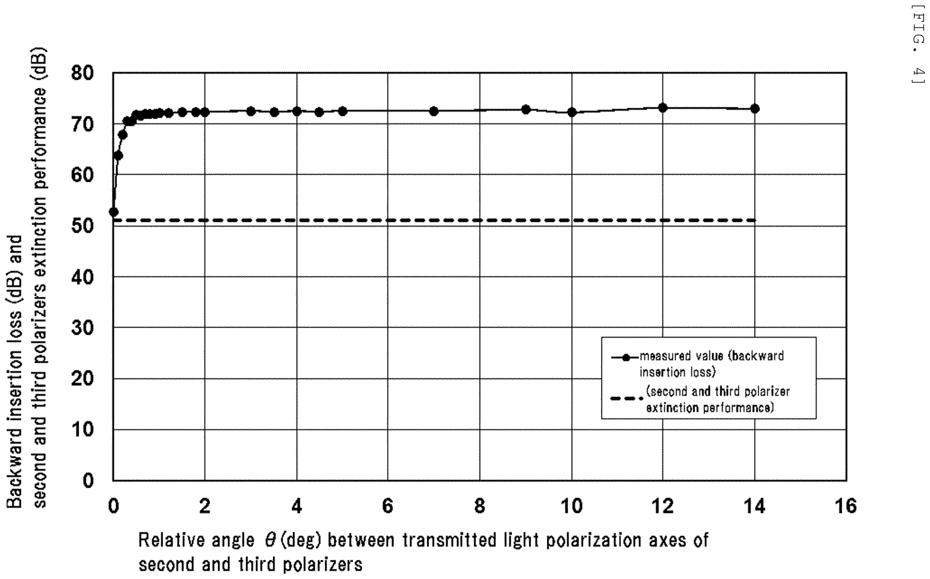

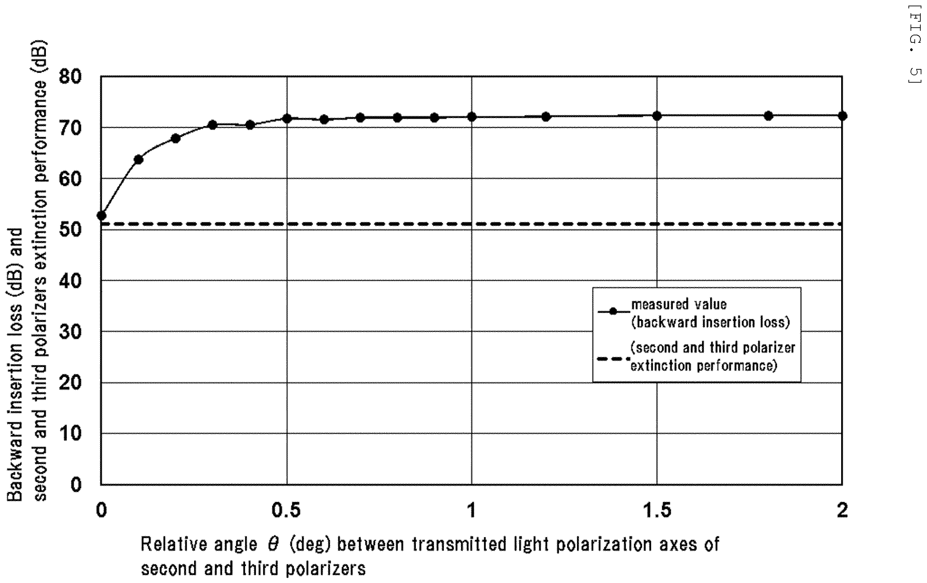

The inventors of the present invention have found that as the relative angle θ between the transmitted light polarization axes of the second and third polarizers is gradually increased from 0.0 degrees (°), the backward insertion loss of the optical isolator increases away from the extinction performance of the polarizers and exhibits a greater value. FIG. 4 and FIG. 5 illustrate a relationship between the relative angle θ between the transmitted light polarization axes of the second and third polarizers and the backward insertion loss of the optical isolator. For comparison, the extinction performance of the polarizer (dotted line) is also illustrated. FIG. 4 illustrates the relative angle θ in the range of 0 to 14 degrees (°), and FIG. 5 is an enlarged illustration of the relative angle θ from 0 to 2 degrees (°). As illustrated in FIGs. 4 and 5, as the relative angle θ between the transmitted light polarization axes of the second and third polarizers is gradually increased from 0.0 degrees (°), the backward insertion loss of the optical isolator increases away from the extinction performance of the polarizers and exhibits a greater value. Presumably, the relative angle between the transmitted light polarization axes acts to allow each of the polarizers to have an independent function.

Presumably, when the relative angle θ between the transmitted light polarization axes of the second and third polarizers is 0.0 degrees (°), the second and third polarizers function integrally and consequently exhibit the same behavior as a 1.5-stage optical isolator (three polarizers, two Faraday rotators), and there is a strong dependence on the performance of the polarizers.

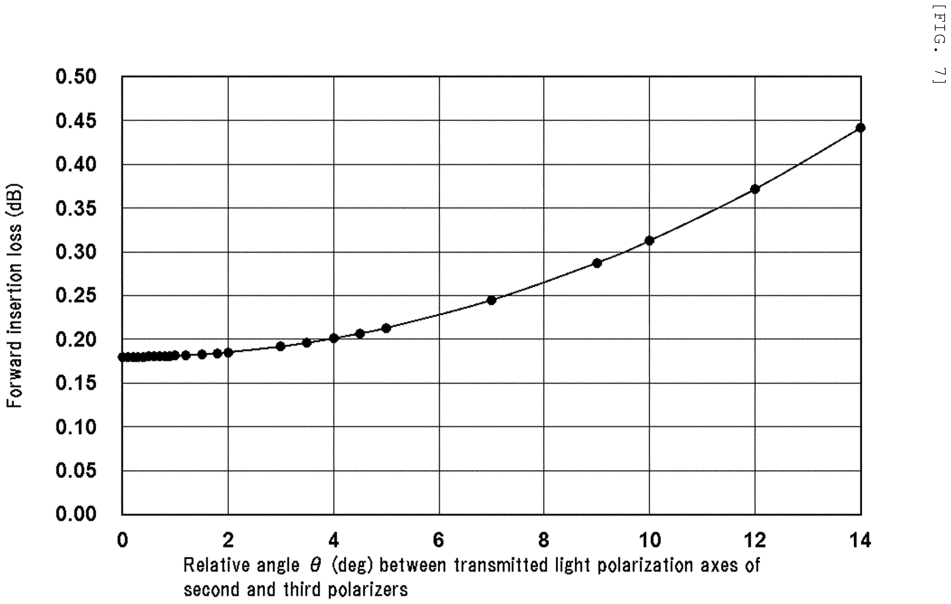

On the other hand, as illustrated in FIG. 7, it was confirmed that as the relative angle θ between transmitted light polarization axes of the second and third polarizers is increased, the forward insertion loss of the optical isolator gradually increases from 0.18 dB at which the relative angle θ between the transmitted light polarization axes is 0.0 degrees (°). In the optical isolator according to the present invention, the upper limit of the relative angle θ between the transmitted light polarization axes of the second and third polarizers is not limited, but the upper limit of the relative angle θ between the transmitted light polarization axes can be, for example, equal to or less than 10.0 degrees (°), preferably equal to or less than 5.0 degrees (°), more preferably equal to or less than 1.0 degrees (°), considering that the forward insertion loss is required to have a smaller value.

### EXAMPLE

Hereinafter, the present invention will be specifically described with Examples. However, the present invention is not limited thereto.

A dual-stage optical isolator as illustrated in FIG. 1 was produced. A flat-plate glass polarizer (Polarcor from Corning Incorporated) in which Ag particles were dispersed and oriented was used as a polarizer. (TbEuBi)₃(FeGa)₅O₁₂ was used for a Faraday rotator.

As first and second polarizers, a 1550 nm AR coat for air was applied to the surfaces of polarizing glasses (11 mm square, 0.2 mm thick, extinction performance 52dB) corresponding to a light input surface and a light output surface. An anti-epoxy coat was applied to both surfaces of a 45.0 degree Faraday rotator for 1550 nm (11 mm square, 0.54 mm thick), and the Faraday rotator was laminated with the AR coat-free surfaces of the polarizing glasses via epoxy adhesive and securely bonded so that the relative angle between the transmitted light polarization axes of the first and second polarizers was 45.0 degrees. Subsequently, the resulting laminate was cut and processed into a 2 mm square, which was inserted into a permanent magnet (outer diameter 5.0 mm × inner diameter 2.9 mm × length 1.2 mm) and securely bonded. This was the first stage of the dual-stage optical isolator. The third polarizer, the fourth polarizer, the second Faraday rotator, and the permanent magnet in the second stage were also prepared with the same materials and through the same procedure as the first stage.

### (Comparative Example)

The relative angle θ between the transmitted light polarization axes of the second and third polarizers was set to 0.0 degrees (°). In this case, as indicated by the solid line in FIG. 8, the value of backward insertion loss obtained by inserting two isolators was adjacent to the extinction performance of the second and third polarizers. As previously mentioned, this suggests that the backward insertion loss is dependent on the extinction performance of the polarizer located in the middle. Presumably, the second and third polarizers functioned integrally and consequently exhibited the same behavior as a 1.5-stage optical isolator (three polarizers, two Faraday rotators), and there was a strong dependence on the performance of the polarizers.

### (Example 1)

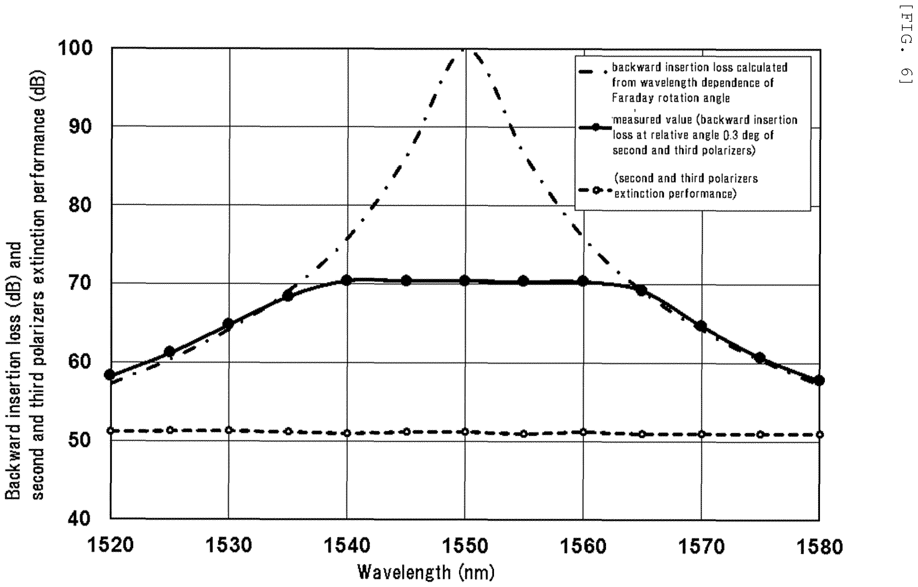

The relative angle θ between the transmitted light polarization axes of the second and third polarizers was fixed to 0.3 degrees (°), and the wavelength dependence of backward insertion loss was evaluated. The result is shown in FIG. 6. In FIG. 6, the solid line indicates the measured value of wavelength dependence of backward insertion loss in Example 1. The dash-dot line and the dotted line are the same as those in FIG. 4. Unlike the solid line in FIG. 8, the measured value of wavelength dependence of backward insertion loss in Example 1 is high in the overall evaluation wavelength range and exhibits behavior closer to the calculated value from wavelength dependence of Faraday rotation angle of the Faraday rotator as indicated by the dash-dot line. Also in this respect, higher backward insertion loss can be achieved compared with the polarizer extinction performance dependence.

### (Example 2)

An integrated dual-stage optical isolator as illustrated in FIG. 2 was produced. Polarizing glasses 15 mm square and 0.12 mm thick (extinction performance 52dB) were used as polarizers, and a 1550 nm AR coat for air was applied to the surfaces of the first and fourth polarizing glasses. An anti-epoxy coat was applied to both surfaces of each of 45.0 degree Faraday rotators for 1550 nm (0.41 mm thick) used as 15 mm square first and second Faraday rotators. The Faraday rotators were laminated with the AR coat-free surfaces of the polarizing glasses via epoxy adhesive and securely bonded so that the relative angles between the first and second polarizers and between the third and fourth polarizers were each 45.0 degrees. Subsequently, the laminates were securely bonded so that the relative angle θ between the transmitted light polarization axes of the second and third polarizers was 0.5 degrees. An integrated dual-stage optical isolator plate was thus produced. Subsequently, the resulting plate was cut and processed into a 0.8 mm square, which was inserted into a permanent magnet (outer diameter 3.0 × inner diameter 1.2 mm × length 1.6 mm) and securely bonded. The produced optical isolator had high light-blocking performance, such as forward insertion loss of 0.20 dB and backward insertion loss of 73dB, for light with a wavelength of 1550 nm.

As described above, according to the examples of the present invention, an optical isolator having high light-blocking performance was obtained.

The specification includes the following embodiments.
[1]: An optical isolator with multiple stages, comprising: an optical element comprising at least a first polarizer, a first Faraday rotator, a second polarizer, a third polarizer, a second Faraday rotator, and a fourth polarizer in sequence in a direction in which light travels; and at least one permanent magnet configured to apply a magnetic field to the first Faraday rotator and the second Faraday rotator,
   wherein a relative angle between a transmitted light polarization axis of the second polarizer and a transmitted light polarization axis of the third polarizer is equal to or more than 0.1 degrees.
[2]: The optical isolator of the above [1], wherein the first polarizer, the first Faraday rotator, and the second polarizer are integrated, and the third polarizer, the second Faraday rotator, and the fourth polarizer are integrated.
[3]: The optical isolator of the above [1] or the above [2], wherein the second polarizer and the third polarizer are flat-plate polarizers.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An optical isolator with multiple stages, comprising: an optical element comprising at least a first polarizer, a first Faraday rotator, a second polarizer, a third polarizer, a second Faraday rotator, and a fourth polarizer in sequence in a direction in which light travels; and at least one permanent magnet configured to apply a magnetic field to the first Faraday rotator and the second Faraday rotator,
wherein a relative angle between a transmitted light polarization axis of the second polarizer and a transmitted light polarization axis of the third polarizer is equal to or more than 0.1 degrees.

2. The optical isolator according to claim 1, wherein the first polarizer, the first Faraday rotator, and the second polarizer are integrated, and the third polarizer, the second Faraday rotator, and the fourth polarizer are integrated.

3. The optical isolator according to claim 1 or 2, wherein the second polarizer and the third polarizer are flat-plate polarizers.
